# EUROPEAN PATENT APPLICATION

(11) **EP 2 677 531 A1**
(43) Date of publication of application: **25.12.2013**
(21) Application number: 12172917.2
(22) Date of filing: 21.06.2012
(51) Int. Cl.: H01H 33/55, H01F 27/40, H02H 5/08

(54) **Gas sampling device for a buchholz relay, buchholz relay comprising such sampling device and method for operating said sampling device**

(71) Applicant: ABB Technology AG, 8050 Zürich (CH)
(72) Inventor: Manco, Giuseppe Leonardo, 87029 SCALEA - (CS) (IT); Carollo, Carlo, 36016 Thiene (VI) (IT); Tonin, Andrea, 36077 BROGLIANO - VICENZA (IT)
(74) Representative: Iannone, Carlo Luigi

(57) **Abstract**

A gas sampling device for a Buchholz relay, a Buchholz relay comprising such sampling device and a method for operating said sampling device, which comprises
- a body (12) having a through channel (13) equipped with an inlet opening (14), suitable for being put in communication with the interior of a Buchholz relay (11), and an outlet opening (15) suitable for being put in communication with a sampling container (16);
- a valve (17) connected with said body and intercepting said channel (13), operable in order to open and close said channel (13);
- an actuating device (18), which is electromechanical, mechanically connected to the valve (17) in order to operate it;
- a controlling device (19), which is electronic, electronically connected to the actuating device (18), in order to control it, the controlling device (19) being operable in order to operate the valve (17) in order to to perform the gas sampling in the Buchholz relay (11).

## Description

The present invention regards a gas sampling device for a Buchholz relay, a Buchholz relay comprising such sampling device and a method for operating said sampling device.

In particular, the sampling device in question is suitable for sampling the gas which may be present in Buchholz relays of electrical transformers.

The present sampling device is especially intended to be installed on a Buchholz relay of an electric transformer, in order to allow sampling the gas which may be present in the Buchholz relay, particularly in case of malfunctioning of the same electric transformer.

Thus the present invention is in the field of electric energy supply and particularly in the field of the manufacturing of electrical transformers and accessories of the latter.

Nowadays, sampling devices installed on Buchholz relay are known.

Such sampling devices comprise a body having a through channel equipped with an inlet opening, suitable for being put in communication with the interior of a Buchholz relay, and an outlet opening suitable for being put in communication with a gas sampling container.

Such traditional sampling devices further comprise a valve connected with said body and intercepting the channel, operable in order to open and close the same channel.

After a malfunction of an electric transformer, gas can be formed inside it.

A Buchholz relay installed on an electric transformer has a container suitable for receiving the gas which can be formed in case of malfunction.

To assess the origin of the malfunction, today a sampling of such gas from the Buchholz relay and the analysis of such gas can be performed.

From the operational point of view, in order to perform a sampling of gas that accumulates in a Buchholz relay, the operator, today, has to reach the transformer on which the Buchholz relay is installed, connecting a sampling container to the sampling device and open the valve.

Traditionally, the Buchholz relay are placed in an high position, or anyway in a hardly accessible position, such sampling is dangerous for the operator and is complex to be performed.

Furthermore, such sampling nowadays requires specialized personnel.

Furthermore, nowadays there is a strong need of automation of power networks and in particular there is the need of having a timely diagnosis of the conditions of operation of the network and its components such as transformers.

The problem underlying the present invention is to make the sampling of gases from Buchholz relay easier.

The main task of the present invention is to provide a sampling device, in Buchholz relay and a method for operating a sampling device which solve such problem overcoming the drawbacks of traditional Sampling device and Buchholz relay and of the operations of sampling described above.

In the context of such task, the aim of the present invention is to propose a sampling device that can be operated remotely.

Another object of the present invention is to provide a sampling device and a Buchholz relay, which do not require the operator to physically reach the transformer to perform a sampling operation.

Another object of the invention consists in proposing a method for operating a sampling, that allows to have a timely sampling of gas in a Buchholz relay.

This task, as well as these and other objects, which will become clear hereinafter, is achieved by means of a sampling device, of a Buchholz relay and of a method for operating a sampling, according to the attached independent claims.

Details of the sampling device, of the Buchholz relay and of the method of operating a sampling, according to the invention, are given in the dependent claims. Further characteristics and advantages of invention will become apparent from the description of an embodiment, which is preferred, but not limiting, of a sampling device, of a Buchholz relay and of a method of operation a sampling, according to the invention, illustrated by way of indicating and not limiting in the attached drawings, wherein:

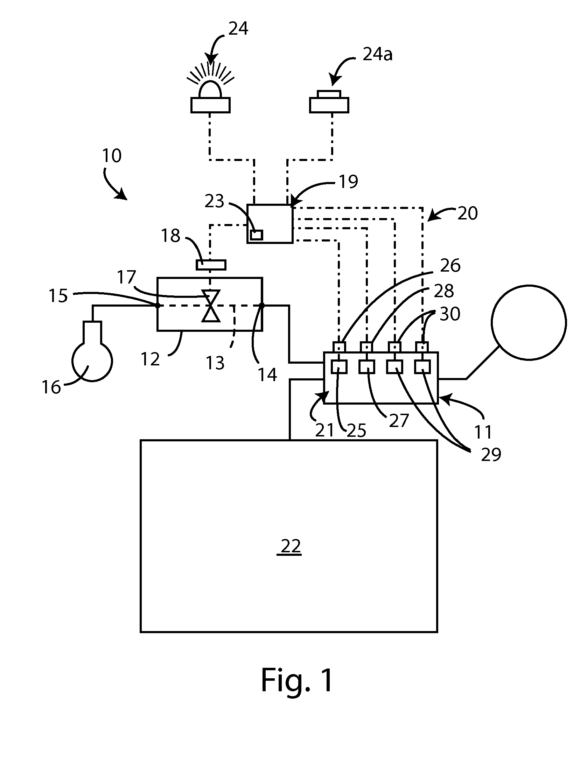

- Figure 1 shows a simplified scheme of a sampling device, according to the invention, connected to the Buchholz relay of an electric transformer;
- Figure 2 illustrates in perspective view a Buchholz relay equipped with a sampling device according to the invention;
- Figures 3 and 4 show two block diagrams which depict two possible implementations of the method for operating a sampling device according to the invention.

With particular reference to the figures, a gas sampling device, for a Buchholz relay 11, is globally indicated with 10, and, according to present invention, has a particular characteristic in comprising:
- a body 12 having a through channel 13 equipped with an inlet opening 14, suitable for being put in communication with the interior of a Buchholz relay 11, and an outlet opening 15 suitable for being put in communication with a sampling container 16;
- a valve 17 connected with said body 12 and intercepting said channel 13, operable in order to open and close said channel 13;
- an actuating device 18, which is electromechanical, mechanically connected to the valve 17 in order to operate it;
- a controlling device 19, which is electronic, electronically connected to the actuating device 18, in order to control the actuating device 18, the controlling device being operable in order to operate the valve 17.

By means of the electronic controlling device 19, the sampling device can be operated remotely, i.e. from a control station, or from a safe position which is easy to be reached by the operator, so as the gas sampling operation is made simpler than the traditional operations.

Advantageously, the controlling device 19 comprises connecting means 20 for connecting the controlling device 19 with detecting means 21 for detecting a malfunction of an electric transformer 22, the controlling device 19 being suitable for opening the valve 17 by means of the actuating device 18 after receiving a malfunction signal from detecting means 21. Preferably, the controlling device 19 comprises, or is connected to, a timer device 23 and is suitable for controlling the opening of the valve 17, after the lapse of a computed predetermined delay time, by means of the timer device 23, starting from receiving the malfunction signal.

Advantageously, the controlling device 19 comprises, or is connected to, a signalling device 24 and is suitable for sending an alert signal to an operator by means of the signalling device 24, after receiving a malfunction signal.

Furthermore, preferably the sampling device 10 comprises a control 24a, available for an operator for operating the controlling device 19 in order to opening or closing the valve 17.

For example, when the transformer is put in a position which is hard to be reached, i.e. on top of a pole, the control 24a can be put at the bottom of the pole, so as to be easily operated by an operator.

In such case, evidently, the opening of outlet opening 15 of Buchholz relay 11 will be connected to a conduit having one end which is also placed at the bottom of such pole, or anyway easily accessible by the operator, in order to allow operators coupling a sampling container 16 with such end, for collecting gas powered by the sampling device 10.

It is another object of the present invention also a Buchholz relay 11 which has a peculiarity in comprising the sampling device 10.

Preferably, the Buchholz relay 11 comprises an electromechanical alarm device 25 suitable for taking action after a gas formation in the Buchholz relay 11, the connecting means 20 comprising at least a first electrical connector 26, suitable for receiving an electric signal from the electromechanical alarm device 25.

Furthermore, the Buchholz relay 11 advantageously comprises also an electronic warning device 27, preferably comprising at least a float, suitable for detecting the level of the oil present in the Buchholz relay 11, the connecting means 20 comprising at least a second electrical connector 28, suitable for receiving an electric signal from the electronic warning device 27.

The Buchholz relay 11 preferably comprises a safety device 29 suitable for detecting the oil in said Buchholz relay 11 exceeding at least a threshold speed value, the connecting means 20 comprising at least a third connector 30 suitable for receiving an electric signal from the safety device 29.

Furthermore, it is a further object of the present invention a method for operating a sampling device 10, suitable for sampling gas in a Buchholz relay 11. Such method for operating, according to the present invention, has a peculiarity in comprising:
- a step of detecting A a malfunction of an electric transformer, by means of receiving a malfunction signal by the controlling device 19; and
- a step of sampling B gas from the Buchholz relay 11, consisting in opening, for a limited time period of sampling, the valve 17, which is operated upon a command by the controlling device 19.

Such step of detecting A advantageously comprises the steps A1, A2, A3, A4 of receiving a malfunction signal from an electromechanical alarm device 25 or from a un electronic warning device 27, i.e. comprising floats suitable for detecting the level of the oil in the Buchholz relay 11, or from a safety device 29 which is advantageously equipped with two speed sensors for detecting the speed of the oil in the Buchholz relay 11, in order to show the exceeding two different threshold speed values of the oil.

Preferably, such method for operating provides a step of waiting C, in delaying, for a preset delay period, the initiation of said step of sampling B, with respect to the instant in which said malfunction signal is received.

The method for operating according to the present invention advantageously provides at least a first step of consent requesting D, consisting in sending to an operator a signal of consent requesting and in receiving a first response signal D1 or D2 from the operator, the step of waiting C being excluded in case such signal of consent is negative, as in the case labelled with D2.

Furthermore, the method for operating according to the present invention preferably comprises a second step of consent requesting E, consisting in sending a second signal of consent requesting to an operator and in receiving a response signal E1 or E2 from the operator, the step of sampling B being excluded in case such signal of consent is negative, as in the case labelled with E2.

Furthermore, preferably the method for operating according to the invention , comprises a step of alerting F consisting in sending an alert signal to an operator.

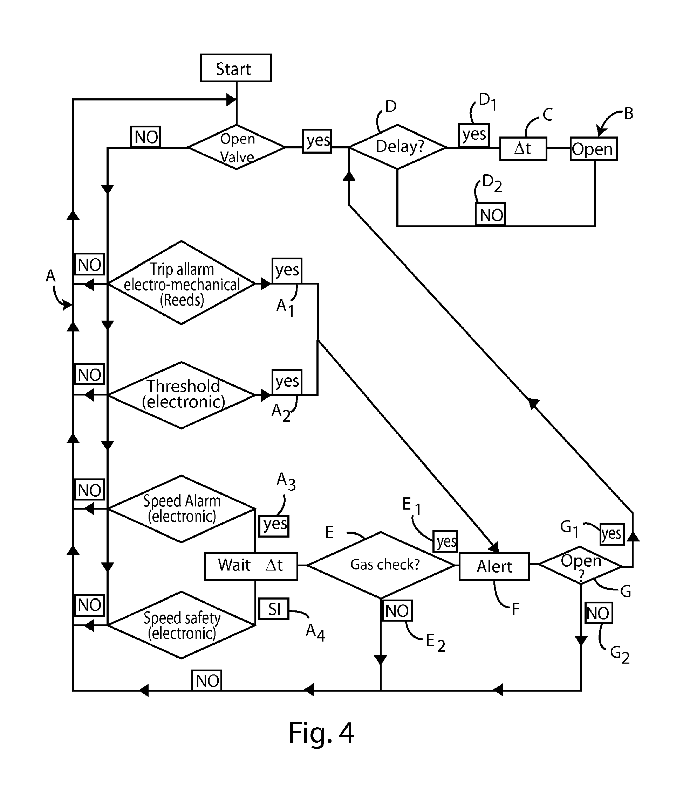

Such alert signal can be transmitted after any of the detecting means 21 or the electromechanical alarm device 25 or the electronic warning device 27 or one of the safety devices 29 emit a malfunction signal, as shown in figure 4.

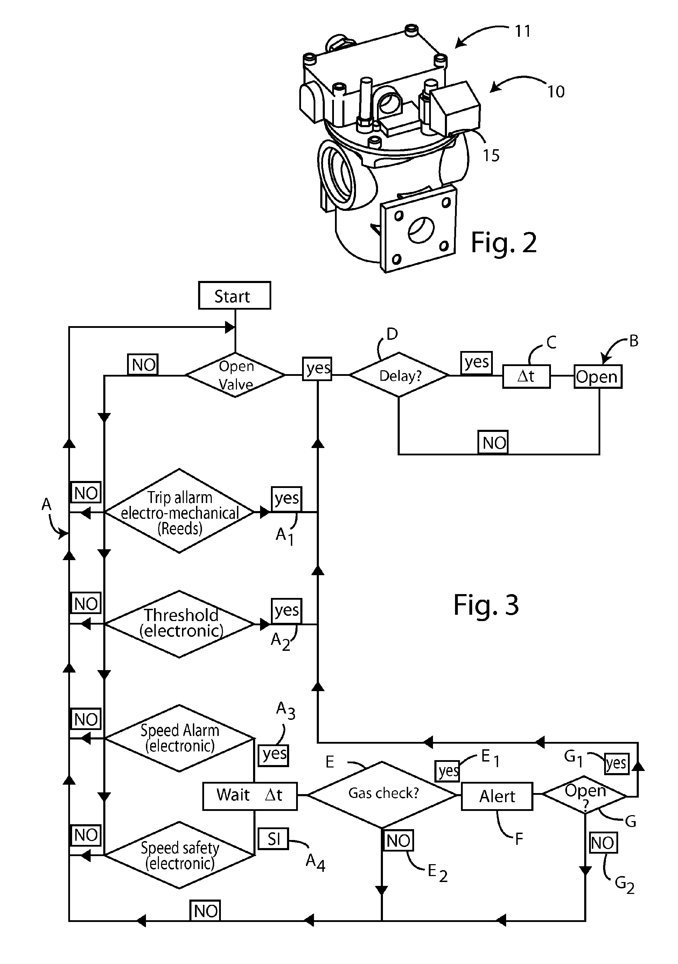

Or, differently, such alert signal can be transmitted only after one of the safety devices 29 emits a malfunction signal, as shown for example in figure 3.

The method for operating a sampling device, according to the present invention , preferably comprises a third step of consent requesting G, which preferably follows the above mentioned step of alerting F, consisting in sending signal of consent requesting to an operator and in receiving a third response signal G1 or G2 from the operator, the step of sampling B being excluded in case such signal of consent is negative, as labelled with G2.

The invention thus conceived is suitable for receiving numerous modifications and variations, all falling within the scope of protection of the appended claims. Furthermore, all details may be replaced by other technically equivalent elements.

In practice, materials employed, as well as shapes and dimensions, may be varied depending on the contingent requirements and the state of the art.

Where structural characteristics and techniques mentioned in the appended claims are incorporated herein by reference of signs or numbers, or numbers of reference, such signs have been affixed with sole purpose of increasing the intelligibility of the claims themselves and, in consequence, they do not constitute any way limiting the interpretation of each element identified, purely by way of example, by such signs or numbers of reference.

## Claims

1. Gas sampling device (10) for a Buchholz relay (11), **characterized in** comprising
- a body (12) having a through channel (13) equipped with an inlet opening (14), suitable for being put in communication with the interior of a Buchholz relay (11), and an outlet opening (15) suitable for being put in communication with a sampling container (16);
- a valve (17) connected with said body (12) and intercepting said channel (13), operable in order to open and close said channel (13);
- an actuating device (18), which is electromechanical, mechanically connected to said valve (17) in order to operate said valve (17);
- a controlling device (19), which is electronic, electronically connected to said actuating device (18), in order to control said actuating device (18), said controlling device (19) being operable in order to operate said valve (17).

2. Sampling device according to claim 1, **characterized in that** said controlling device (19) comprises connecting means (20) for connecting said controlling device (19) with detecting means (25, 27, 29) for detecting a malfunction of an electric transformer (22), said controlling device (19) being suitable for opening said valve (17), by means of said actuating device (18), in the event of receiving a malfunction signal from said detecting means (25, 27, 29).

3. Sampling device, according to claim 2, **characterized in that** said controlling device (19) comprises, or is connected to, a timer device (23) and is suitable for controlling the opening of said valve (17), at the lapse of a computed predetermined delay time, by means of said timer device (23), starting from receiving said a malfunction signal.

4. Sampling device, according any of claims 2 and 3, **characterized in that** said controlling device (19) comprises, or is connected to, a signalling device (24) and is suitable for sending an alert signal to an operator by means of said signalling device (24), in the event of receiving said malfunction signal.

5. Buchholz relay (11) **characterized in** comprising a sampling device according to any of previous claims.

6. Buchholz relay (11) according to claim 5 **characterized in** comprising an electromechanical alarm device (25) suitable for taking action in case of gas formation in said Buchholz relay (11), said connecting means (20) comprising at least a first electrical connector (26) suitable for receiving an electric signal from said electromechanical alarm device (25).

7. Buchholz relay (11) according to any of claims 5 and 6, **characterized in** comprising an electronic warning device (27) suitable for detecting the level of oil present in said Buchholz relay (11), said connecting means (20) comprising at least a second electrical connector (28) suitable for receiving an electric signal from said electronic warning device (27).

8. Buchholz relay (11) according to any of claims from 5 to 7, **characterized in** comprising a safety device (29) suitable for detecting the oil in said Buchholz relay (11) exceeding at least one threshold speed value, said connecting means (20) comprising at least a third connector (30) suitable for receiving an electric signal from said safety device (29).

9. Method for operating a sampling device (10) for gas sampling from a Buchholz relay (11), according to any of previous claims, **characterized in** comprising
- a step of detecting (A) a malfunction, by means of receiving a malfunction signal by said controlling device (19);
- a step of sampling (B) gas from said Buchholz relay (11), consisting in opening, for a limited time period of sampling, said valve (17), which is operated upon a command by said controlling device (19).

10. Method for operating according to claim 9, **characterized in** providing a step of waiting (C), consisting in delaying, for a preset delay period, the initiation of said step of sampling (B), with respect to the instant in which said malfunction signal is received.

11. Method for operating according to claim 10, **characterized in** providing at least a first step of consent requesting (D), consisting in sending to an operator a signal of consent requesting and in receiving a first response signal (D1, D2) from said operator, said step of waiting (C) being excluded in case said signal of consent is negative (D2).

12. Method for operating according one of claims from 9 to 11, **characterized in** comprising a second step of consent requesting (E), consisting in sending a second signal of consent requesting to an operator and in receiving a response signal (E1, E2) from said operator, said step of sampling (B) being excluded in case said signal of consent is negative (E2).

13. Method for operating according to one of claims from 9 to 12, **characterized in** comprising a step of alerting (F) consisting in sending an alert signal to an operator.

14. Method for operating according to one of claims from 9 to 13, **characterized in** comprising a third step of consent requesting (G) consisting in sending a signal of consent requesting to an operator and in receiving a third response signal (G1, G2) from the operator, said step of sampling (B) being excluded in case such signal of consent is negative (G2).
